# EUROPÄISCHE PATENTSCHRIFT

(11) **EP 4 292 154 B1**
(45) Veröffentlichungstag und Bekanntmachung des Hinweises auf die Patenterteilung: **18.11.2026**
(21) Anmeldenummer: 22702626.7
(22) Anmeldetag: 18.01.2022
(51) Int. Cl.: H01M 8/04029, B60L 58/30, H01M 8/04007, H01M 8/04119, H01M 8/04291, H01M 8/0432, H01M 8/04537, H01M 8/04746, H01M 8/04828

(54) **VERDUNSTUNGSKÜHLUNG FÜR EIN KRAFTFAHRZEUG MIT BRENNSTOFFZELLENANTRIEB**
EVAPORATIVE COOLING FOR A MOTOR VEHICLE WITH FUEL-CELL DRIVE
REFROIDISSEMENT PAR ÉVAPORATION POUR UN VÉHICULE À MOTEUR AVEC ENTRAÎNEMENT DE PILE À COMBUSTIBLE

(30) Priorität: 15.02.2021 DE 102021103449
(43) Veröffentlichungstag der Anmeldung: 20.12.2023
(73) Patentinhaber: MAN Truck & Bus SE, 80995 München (DE)
(72) Erfinder: ENGASSER, Julius, 80995 München (DE); KÖHLER, Jürgen, 38173 Niedersickte (DE); WAGENBLAST, Max, 85221 Dachau (DE); SWOBODA, Jan, 80995 München (DE)
(74) Vertreter: v. Bezold & Partner Patentanwälte - PartG mbB
(86) Internationale Anmeldenummer: PCT/EP2022/051024
(87) Internationale Veröffentlichungsnummer: WO 2022/171402

(56) Entgegenhaltungen:
- DE-A1- 102011 109 645
- DE-A1- 102016 002 862
- JP-A- 2017 073 289
- JP-A- 2019 036 469
- US-A1- 2020 044 264

## Beschreibung

### Technischer Hintergrund

Die Erfindung betrifft ein Brennstoffzellensystem für ein Fahrzeug, mit einer Kühlvorrichtung, umfassend einen Kühler, einer Wassergewinnungsvorrichtung zum Gewinnen von flüssigem Wasser aus Abgas der Brennstoffzelle und mit einer Wasserausstoßvorrichtung zum Ausstoßen und Verteilen von gewonnenem flüssigem Wasser auf dem Kühler oder in einem Zuluftstrom des Kühlers.

US 2020/0044264 A1 beschreibt ein Brennstoffzellensystem mit einer Kühlvorrichtung, die ausgelegt ist, um die Brennstoffzelle durch Wärmeaustausch unter Verwendung eines Wärmeträgers zu kühlen, einem Wasserreservoir, das Wasser speichert, einem Luftabführungskanal zum Abführen eines Luftabgases von der Brennstoffzelle mit einem Gegendruck-Einstellventil zum Einstellen des Druckes des Druckabgases, und mit einem Hochdruckeinleitungskanal, der das Wasserreservoir mit dem Luftabführungskanal strömungsaufwärts des Gegendruck-Einstellventils in einer Luftströmungsrichtung verbindet, und mit einer Besprühungsvorrichtung, um das Wasser des Wasserreservoirs über die Kühlvorrichtung zu spritzen. Die Besprühungsvorrichtung ist dazu ausgelegt, das durch den Druck des Luftabgases gepumpte Wasser des Wasserreservoirs über die Kühlvorrichtung zu spritzen.

KR 20170059515 A beschreibt ein Brennstoffzellenkühlsystem mit einem Kühler zum Abführen von Wärme aus einem Kühlmittel für den Brennstoffzellenstapel und mit einer Sprühdüse, die Druckluft und Wasser mischt und die Mischung auf einer Oberfläche oder Vorderseite des Kühlers sprüht.

US 2007/0134526 A1 beschreibt ein Brennstoffzellensystem mit einer Wasserrückgewinnungsvorrichtung zum Trennen und Rückgewinnen von Wasser aus Abgas der Brennstoffzellen.

JP 2007-242280 A beschreibt ein Brennstoffzellensystem mit einer Kühlmittelzufuhrvorrichtung zum Zirkulieren eines Kühlmittels innerhalb der Brennstoffzelle und einem Kühler zum Kühlen des Kühlmittels. Stromabwärts des Kühlers ist ein Kathodengaseinlass angeordnet, um Kathodengas aufzunehmen, welches der Brennstoffzelle zugeführt wird, sowie Sprühmittel, um Abgaswasser in Richtung des Kühlers zu sprühen.

EP 1 384 967 A2 beschreibt ein Brennstoffzellenkühlsystem mit einem Kühlsystem. Ein Gebläse bläst Luft durch einen Wärmetauscher des Kühlsystems. Das Kühlsystem umfasst eine Verdunstungseinheit, die dem Luftstrom ausgesetzt ist, und eine Leitung, die Abgaswasser von dem Brennstoffzellenstapel der Verdunstungseinheit zuführt. Das Abgaswasser verdunstet und kühlt dadurch die Luft und verringert die Menge des flüssigen Abgaswassers.

JP 2017 073289 A beschreibt ein Brennstoffzellensystem mit einer Brennstoffzelle 210 und einer Wasserrückgewinnungsvorrichtung, die im Reaktionsgas enthaltenes Wasser durch Kühlen des aus der Brennstoffzelle abgegebenen Reaktionsgases zurückgewinnt. Die Wasserrückgewinnungsvorrichtung wird mit Kühlmittel aus einem Kühlkreislauf einer Fahrzeugklimaanlage versorgt, die das Kühlmittel zum Kühlen des Reaktionsgases verwendet. In einem Beispiel umfasst das System ein Kühlvorrichtung für die Brennstoffzelle. Die Kühlvorrichtung umfasst einen Kühler. Das von der Wasserrückgewinnungsvorrichtung rückgewonnene Wasser wird in einem Wassertank gespeichert und von dort mittels einer Pumpe einer Sprühdüse zugeführt, die es auf den Kühler sprüht.

JP 2019 036469 A beschreibt ein Brennstoffzellensystem, bei dem ein Wirbelrohr zur Trennung der Abluft in kühle Luft und warme Luft auf einem Abluftweg vorgesehen ist, um die Abluft nach der Reaktion aus einem Brennstoffzellenstapel abzuführen. Kondenswasser wird durch die Nutzung der kühlen Luft in einem Kondensator gewonnen. In einem Beispiel wird das gewonnene Kondenswasser in einem Speichertank gespeichert und über eine Pumpe einer Sprühvorrichtung zugeführt, die das Wasser auf einen Kühler einer Kühlvorrichtung zum Kühlen des Brennstoffzellenstapels sprüht.

US 2020/0044264 A1 beschreibt ein Brennstoffzellensystem, umfassend: eine Brennstoffzelle; ein Wasserreservoir, das Wasser speichert; und eine Beregnungsvorrichtung, die dazu ausgelegt is, das Wasser des Wasserreservoirs durch Druck des Luftabgases über die Kühleinrichtung zu versprühen. In einem Beispiel wird der Brennstoffzelle Luft durch eine Luftzufuhrvorrichtung in Form eines Luftkompressors zugeführt.

DE 102011109645 A1 beschreibt ein Brennstoffzellensystem mit einem Kühlkreislauf mit einem flüssigen Kühlmedium zum Kühlen der Brennstoffzelle.

DE 102016002862 A1 beschreibt ein Brennstoffzellensystem mit Brennstoffzelle.

### Kurzfassung der Erfindung

Beim Betrieb von Brennstoffzellen-angetriebenen Fahrzeugen stellt es eine große Herausforderung dar, das Brennstoffzellensystem bei hohen Umgebungstemperaturen zu kühlen.

Eine Brennstoffzelle ist gewöhnlich ein elektrochemischer Energiewandler, in dem zwei Reaktanden Wasserstoff und Sauerstoff unter Freisetzung von thermischer und elektrischer Energie zu Wasser reagieren. Wasserstoff, der als Energiespeicher oder Treibstoff dient, wird im Fahrzeug in einem Tank in flüssiger oder gasförmiger Form mitgeführt, während Sauerstoff aus der Umgebungsluft verwendet werden kann. Trotz eines hohen Wirkungsgrades einer Brennstoffzelle entsteht im Betrieb eines Brennstoffzellenstapels Reaktionsabwärme, die nur zum geringen Teil über das Abgas der Brennstoffzellen abgeführt wird. Der größere Teil der Abwärme muss über ein Kühlsystem mit wenigstens einem Kühler an die Umgebung abgeführt werden. Die Brennstoffzelle hat eine relativ geringe Betriebstemperatur. Eine maximal zulässige Kühlmitteltemperatur des Kühlsystems kann beispielsweise im Bereich von etwa 80°C bis 95°C liegen, vorzugsweise im Bereich von etwa 80°C bis 90°C. Da die Kühlleistung eines Kühlers (die Wärmeübertragungsfähigkeit aus dem Kühlmittel an die Umgebung) maßgeblich von der Temperaturdifferenz zwischen dem Kühlmittel des Kühlers und der Umgebung abhängt, erschwert das niedrige Temperaturniveau der Betriebstemperatur der Brennstoffzelle, und somit des Kühlmittels, die Wärmeabgabe an die Umgebung. Das geringe Temperaturniveau der Brennstoffzelle und der geringe Wärmeaustrag über das Abgas der Brennstoffzelle sind zwei Effekte, die die Entwicklung eines deutlich effektiveren Kühlsystems für Brennstoffzellenfahrzeuge wünschenswert machen. Bei einer Kühlvorrichtung, bei der Wasser auf eine Oberfläche eines Kühlers der Kühlvorrichtung gesprüht wird, wird die Kühlleistung gesteigert, indem die Verdunstungsenergie des Phasenwechsels des Wassers von flüssig zu gasförmig genutzt wird.

Aufgabe der Erfindung ist es, ein System anzugeben, das eine besonders effiziente Verdunstungskühlung für eine Brennstoffzelle eines Kraftfahrzeugs mit Brennstoffzellenantrieb ermöglicht.

Erfindungsgemäß wird die Aufgabe gelöst durch ein Brennstoffzellensystem gemäß Anspruch 1, für ein Fahrzeug, aufweisend: eine Brennstoffzelle; eine Abgasleitung zum Abführen von Wasser enthaltendem Abgas von der Brennstoffzelle; eine Wassergewinnungsvorrichtung zum Gewinnen von flüssigem Wasser aus dem Abgas, wobei die Wassergewinnungsvorrichtung einen Abgaskühler aufweist, wobei der Abgaskühler einen Wärmetauscher umfasst, der an der Abgasleitung angeordnet ist und dazu eingerichtet ist, durch Übertragen von Wärme von dem Abgas an einen Strom eines Kühlmediums das in der Abgasleitung über den Wärmetauscher geführte Abgas zu kühlen und in dem Abgas enthaltenes Wasser zu kondensieren, wobei das dem Wärmetauscher mit dem Abgas zugeführte Wasser einschließlich des daraus kondensierten Wassers über die Abgasleitung von dem Wärmetauscher abgeführt wird; wobei das Brennstoffzellensystem weiter aufweist: einen Wassertank, der stromabwärts des Wärmetauschers mit der Wassergewinnungsvorrichtung gekoppelt ist und dazu eingerichtet ist, gewonnenes Wasser zu speichern; eine Kühlvorrichtung zum Kühlen der Brennstoffzelle, umfassend einen Kühler; eine Wasserausstoßvorrichtung zum Ausstoßen und Verteilen von Wasser auf dem Kühler oder in einem Zuluftstrom des Kühlers; und eine Wasserleitung, um Wasser aus dem Wassertank der Wasserausstoßvorrichtung zuzuführen.

Der Wärmetauscher ist dazu eingerichtet, in dem Abgas enthaltenen Wasserdampf und/oder in dem Abgas enthaltenes gasförmiges Wasser zu kondensieren. Das kondensierte Wasser und ein etwaiger nicht kondensierter Anteil des Wassers werden über die Abgasleitung von dem Wärmetauscher abgeführt.

Die Brennstoffzelle kann als Brennstoffzellenstapel ausgebildet sein. Die Brennstoffzelle ist vorzugsweise für eine elektrochemische Reaktion von in Luft enthaltenem Sauerstoff und Wasserstoff ausgelegt. Das Wasser enthaltende Abgas kann Kathoden-seitiges Abgas und/oder Anoden-seitiges Abgas der Brennstoffzelle sein. Je nach Betriebspunkt einer Brennstoffzelle liegt ein großer Teil des Wassers im Abgasstrom der Brennstoffzelle dampfförmig bzw. gasförmig vor, und nur ein geringer Anteil des Wassers ist flüssig. Beim Durchströmen des Wärmetauschers durch das Abgas wird Wasser kondensiert, welches mit dem Abgasstrom aus dem Wärmetauscher herausgeführt wird. Der Wärmetauscher erhöht einen Anteil von flüssigem Wasser in dem in der Abgasleitung über den Wärmetauscher geführten Abgas. Der Wärmetauscher fügt etwaigem schon stromaufwärts im Abgas enthaltenem flüssigen Wasser weiteres, aus dem Abgas kondensiertes, flüssiges Wasser hinzu.

Der Wassertank kann mit der Abgasleitung gekoppelt sein. Der Wassertank ist dazu eingerichtet, gewonnenes, über die Abgasleitung abgeführtes Wasser zu speichern. Der Wassertank ist dazu eingerichtet, gewonnenes, über die Abgasleitung von dem Wärmetauscher abgeführtes Wasser zu speichern. Der Wassertank kann stromabwärts der Wassergewinnungsvorrichtung mit der Abgasleitung gekoppelt sein. Der Wassertank ist insbesondere dazu eingerichtet, flüssiges Wasser zu speichern. Der Wassertank dient zum Speichern von durch die Wassergewinnungsvorrichtung gewonnenem flüssigen Wasser .

Dadurch kann relativ viel flüssiges Wasser aus dem Abgas gewonnen und in dem Wassertank zu einer späteren Verwendung zum Kühlen des Kühlers und/oder des Eintrittskühlluftstroms gespeichert werden. So kann dem Wassertank zusätzliches rückgewonnenes Wasser zugeführt werden, wenn in einem Betriebsmodus des Brennstoffzellensystems durch die Wassergewinnungsvorrichtung Wasser aus dem Abgas der Brennstoffzelle zurückgewonnen wird, und es kann Wasser aus dem Wassertank zur Kühlung des Kühlers verwendet werden, um in einem Betriebsmodus der Brennstoffzelle mit hoher Leistung die Kühlleistung der Kühlvorrichtung zum Kühlen der Brennstoffzelle zu erhöhen und/oder den Leistungsbedarf für den Betrieb der Kühlvorrichtung zu verringern. Auf diese Weise kann beispielsweise ein Wasservorrat aufgebaut werden, der bei einem Betrieb der Brennstoffzelle mit besonders hohem Kühlbedarf zur Kühlung verwendet werden kann, ohne dass gleichzeitig weiteres Wasser zurückgewonnen werden muss. Somit kann bei Leistungsspitzen ein besonders effizienter Betrieb des Brennstoffzellensystems ermöglicht werden. Auch kann durch das Speichern von Wasser im Wassertank ein längerer Betrieb des Brennstoffzellensystems mit hoher Leistung auch bei hohen Umgebungstemperaturen ermöglicht werden. Vorteilhaft ist außerdem, dass der Wassertank es ermöglicht, während eines Ausstoßens von Wasser, um den Kühler und/oder den Zuluftstrom des Kühlers zu kühlen, mehr Wasser auszustoßen als zur gleichen Zeit durch die Wassergewinnungsvorrichtung gewonnen wird.

Die Erfindung sieht vor, dass zum Gewinnen größerer Mengen von Wasser aus dem Abgas und Speichern des gewonnenen Wassers im Wassertank der Wärmetauscher Wärme von dem Abgas an einen Strom eines Kühlmediums überträgt. Zur Durchführung dieser Wärmeübertragung können je nach Auslegung des Brennstoffzellensystems ein Kühl- oder Kältekreislauf mit einem Kühlmedium vorgesehen sein, oder es kann Umgebungsluft als Kühlmedium verwendet werden. Somit können beispielsweise freie Kapazitäten eines Kühl- oder Kältekreislaufs des Fahrzeugs zum Gewinnen von Wasser durch die Wassergewinnungsvorrichtung genutzt werden, oder es kann Umgebungsluft genutzt werden. Ein Strom der Umgebungsluft über den Wärmetauscher kann beispielsweise durch die Bewegung des fahrenden Fahrzeugs relativ zur Umgebung bewirkt werden, und/oder ein Lüfter kann vorgesehen sein, um einen erzwungenen Luftstrom zu erzeugen. Somit kann auf energieeffiziente Weise die Menge des im Wassertank gespeicherten Wassers sowie der Anteil des flüssigen Wassers im Abgasstrom aktiv erhöht werden, wobei Kühlkapazitäten eines Stroms des Kühlmediums je nach Betriebssituation des Fahrzeugs leicht zur Verfügung stehen können. Somit wird eine hohe Energie- und Kühleffizienz des Gesamtsystems ermöglicht.

Dabei wird ausgenutzt, dass durch das Ausstoßen und Verteilen von Wasser auf den Kühler oder in einen Zuluftstrom des Kühlers eine wirksame Verdunstungskühlung des Kühlers erfolgt, wodurch ein energieeffizienter Betrieb der Kühlvorrichtung zum Kühlen der Brennstoffzelle erreicht werden kann. Der Wassertank ermöglicht es dabei, längere Betriebsphasen mit einem hohen Leistungsbedarf der Brennstoffzelle und somit einem hohen Kühlleistungsbedarf der Kühlvorrichtung abzufedern.

Es wird somit ermöglicht, später zum Kühlen zu verwendendes Wasser aus der Abluft der Brennstoffzelle zu gewinnen, es im Wassertank zu speichern, und beispielsweise bei hohem Kühlungsbedarf der Brennstoffzelle das Wasser auf den Kühler der Kühlvorrichtung zum Kühlen der Brennstoffzelle oder in einen Zuluftstrom des Kühlers zu sprühen. Dabei kann eine nicht-adiabatische Kühlung des Kühlers erreicht werden, und/oder eine adiabatische Verdunstungskühlung durch Einsprühen des Wassers in den Zuluftstrom des Kühlers erzielt werden.

Die Abgasleitung kann auch als Abgas- und Produktwasserleitung bezeichnet werden, durch die ein Abgasstrom aus der Brennstoffzelle über den Wärmetauscher des Abgaskühlers geleitet wird. Der Abgaskühler kann auch als Abgaskühlvorrichtung bezeichnet werden. Das Brennstoffzellensystem kann ein Verdunstungskühlungssystem aufweisen, das den Wassertank und die Wasserausstoßvorrichtung umfassen kann.

Der Wärmetauscher ist vorzugsweise dazu eingerichtet, durch indirektes Übertragen von Wärme von dem Abgas an den Strom des Kühlmediums das in der Abgasleitung über den Wärmetauscher geführte Abgas zu kühlen und in dem Abgas enthaltenes Wasser zu kondensieren. Es erfolgt somit kein Stoffaustausch zwischen dem Abgas und dem Strom des Kühlmediums. Der Wärmetauscher ist vorzugsweise ein Wärmetauscher ohne Stoffaustausch. Der Strom des Kühlmediums kann beispielsweise von dem Strom des Abgases über den Wärmetauscher separiert sein.

Der Wärmetauscher ist dazu eingerichtet, das dem Wärmetauscher mit dem Abgas zugeführte Wasser einschließlich des daraus kondensierten Wassers über die Abgasleitung von dem Wärmetauscher abzuführen. Der Wärmetauscher führt somit den zugeführten Abgasstrom unter Erhöhung des Anteils von flüssigem Wasser im Abgasstrom ab. Der dem Wärmetauscher zugeführte Abgasstrom mitsamt des darin enthaltenen Wassers wird von dem Wärmetauscher über die Abgasleitung abgeführt. Die Abgasleitung kann beispielsweise gegenüber dem Wärmetauscher und/oder gegenüber dem Strom des Kühlmediums geschlossen sein. Somit wird in dem Abgas enthaltenes Wasser in der gegenüber dem Wärmetauscher und/oder dem Kühlmedium geschlossenen Abgasleitung über den Wärmetauscher geführt. Dies ermöglicht es, dass das in dem Abgas enthaltenen Wasser verlustlos (ohne Wasserabgabe an das Kühlmedium) in der Abgasleitung über dem Wärmetauscher geführt wird.

Vorzugsweise ist der Strom des Kühlmediums von dem in der Abgasleitung geführten Abgas getrennt. Vorzugsweise ist der Strom des Kühlmediums durch eine wärmedurchlässige/wärmeübertragende Wand von dem Abgas getrennt. Die Wand kann beispielsweise eine Wand des Wärmetauschers und/oder eine Wand der Abgasleitung sein.

Die Wasserausstoßvorrichtung kann beispielsweise eine Wassersprühvorrichtung zum Sprühen von Wasser auf den Kühler oder in einen Zuluftstrom des Kühlers sein oder eine solche Wassersprühvorrichtung umfassen. Durch das Sprühen des Wassers ergibt sich eine besonders feine Verteilung, so dass eine Verdunstung begünstigt wird.

In Ausführungsformen kann die Kühlvorrichtung zum Kühlen der Brennstoffzelle einen Kühlkreislauf mit einem Kühlmedium umfassen, wobei der Kühlkreislauf einen Kühlpfad umfasst, der über den Wärmetauscher verläuft. Der Kühlkreislauf oder Kühlmittelkreislauf kann eine Pumpe umfassen. Der Kühlkreislauf kann den Kühler umfassen. Der Kühlkreislauf kann auch als Primärkühlkreislauf der Brennstoffzelle bezeichnet werden. Der Kühlkreislauf kann dazu eingerichtet sein, den Strom des Kühlmediums über den Wärmetauscher bereitzustellen. Somit kann dieses Kühlmedium des Kühlkreislaufs den Strom des Kühlmediums über den Wärmetauscher bilden. Im Wärmetauscher kann somit Wärme von dem Abgas auf das Kühlmedium des Kühlkreislaufes der Kühlvorrichtung zum Kühlen der Brennstoffzelle übertragen werden. Der Kühlpfad kann beispielsweise ein Nebenpfad oder Abzweig des Kühlkreislaufs sein, der über den Wärmetauscher verläuft. Der Kühlkreislauf kann beispielsweise ein Ventil umfassen, mit dem ein Strom des Kühlmediums durch den Kühlpfad gesteuert werden kann. Besonders vorteilhaft ist, dass in einer Betriebsphase mittlerer Leistung der Brennstoffzelle, in der ein relativ hoher Anteil von Wasser in dem Abgas der Brennstoffzelle enthalten ist, eine freie Kühlkapazität des Kühlkreislaufes der Kühlvorrichtung verwendet werden kann, um im Wärmetauscher Wärme vom Abgas der Brennstoffzelle abzuführen. Somit kann gerade in einer Betriebsphase, in der nicht die volle elektrische Leistung der Brennstoffzelle angefordert wird und in der dementsprechend der Kühlkreislauf der Kühlvorrichtung freie Kühlkapazität hat, Wasser aus dem Abgas gewonnen und in dem Wassertank zu einer späteren Verwendung zur Leistungssteigerung gespeichert werden. Insgesamt ist somit ein besonders effizienter Betrieb des Brennstoffzellensystems ermöglicht. Durch eine gesteigerte Kühlung durch den Primärkühlkreislauf der Brennstoffzelle kann der Anteil des flüssigen Wassers im Abgasstrom gesteigert werden. Somit kann auf energieeffiziente Weise die Menge des im Wassertank gespeicherten Wassers sowie der Anteil des flüssigen Wassers im Abgasstrom aktiv erhöht werden, wobei freie Kühlkapazitäten eines Stroms des Kühlmediums je nach Betriebssituation des Fahrzeugs genutzt werden können. Somit wird eine hohe Kühl- und Energieeffizienz des Gesamtsystems ermöglicht.

Bei der Kühlvorrichtung zum Kühlen der Brennstoffzelle kann es sich um einen konventionellen oder einfachen Kühlmittelkreislauf oder um einen Hochtemperaturkompressionskältekreislauf handeln, beispielsweise mit mehreren hintereinandergeschalteten Kühlstufen, die jeweils einen Kühlmittelkreislauf mit Kompressor und Expansionsventil umfassen können, wobei zwei hintereinandergeschaltete Kühlstufen miteinander über einen Wärmetauscher gekoppelt sind. Insbesondere kann die Kühlvorrichtung den oder einen Kühlkreislauf in Form eines Hochtemperaturkompressionskältekreislaufes umfassen.

In Ausführungsformen kann der Strom des Kühlmediums über den Wärmetauscher ein Strom von Luft aus der Umgebung des Fahrzeugs sein oder einen Strom von Luft aus der Umgebung des Fahrzeugs umfassen. Somit kann Wärme aus dem Abgas der Brennstoffzelle an Luft aus der Umgebung des Fahrzeugs abgeführt werden. Somit kann eine Abgaskühlung in besonders effizienter Weise erfolgen. Insbesondere kann die Abgaskühlung auch in einer Betriebsphase mit einer hohen Leistungsanforderung an die Brennstoffzelle in energieeffizienter Weise erfolgen.

Das Brennstoffzellensystem kann weiter eine Pumpe aufweisen, die mit dem Wassertank verbindbar ist und dazu eingerichtet ist, Wasser in Richtung von der Wassergewinnungsvorrichtung oder Abgasleitung zu der Wasserausstoßvorrichtung zu fördern. Die Pumpe kann sowohl stromaufwärts als auch stromabwärts des Wassertanks angeordnet sein. Die Pumpe kann dazu eingerichtet sein, durch die Wassergewinnungsvorrichtung gewonnenes Wasser oder von dem Wärmetauscher über die Abgasleitung abgeführtes Wasser dem Wassertank zuzuführen oder Wasser von dem Wassertank zu der Wasserausstoßvorrichtung abzuführen. Es kann auch sowohl eine Pumpe stromaufwärts des Wassertanks angeordnet sein als auch eine weitere Pumpe stromabwärts des Wassertanks angeordnet sein. Das Vorsehen einer Pumpe hat den Vorteil, dass ein Einfluss des Betriebs der Wasserausstoßvorrichtung auf den Abgasdruck und somit auf den Betriebspunkt der Brennstoffzelle vermieden werden kann. In Ausführungsformen kann der Wassertank durch eine Druckquelle mit Druck beaufschlagbar sein, wobei die Wasserleitung ein Ventil aufweist, über welches der Wassertank mit der Wasserausstoßvorrichtung verbindbar ist, wobei die Wasserausstoßvorrichtung dazu eingerichtet ist, Wasser aus dem durch das Ventil verbundenen Wassertank durch den Druck, mit dem der Wassertank beaufschlagt ist, auszustoßen und auf dem Kühler oder in einem Zuluftstrom des Kühlers zu verteilen.

Gemäß einem zweiten Aspekt dieser Beschreibung, welcher nicht Teil der vorliegenden Erfindung ist, wird die Aufgabe gelöst durch ein Brennstoffzellensystem für ein Fahrzeug, aufweisend:
eine Brennstoffzelle, die für eine elektrochemische Reaktion von in Luft enthaltenem Sauerstoff und Wasserstoff ausgelegt ist;
eine Abgasleitung zum Abführen von Wasser enthaltendem Abgas von der Brennstoffzelle;
eine Wassergewinnungsvorrichtung zum Gewinnen von flüssigem Wasser aus dem Abgas;
einen Wassertank, der mit der Wassergewinnungsvorrichtung gekoppelt ist und dazu eingerichtet ist, gewonnenes Wasser zu speichern;
eine Kühlvorrichtung zum Kühlen der Brennstoffzelle, umfassend einen Kühler;
eine Wasserausstoßvorrichtung zum Ausstoßen und Verteilen von Wasser auf dem Kühler oder in einem Zuluftstrom des Kühlers; und
eine Wasserleitung, um Wasser aus dem Wassertank der Wasserausstoßvorrichtung zuzuführen,
wobei der Wassertank durch eine Druckquelle mit Druck beaufschlagbar ist,
wobei die Wasserleitung ein Ventil aufweist, über welches der Wassertank mit der Wasserausstoßvorrichtung verbindbar ist,
wobei die Wasserausstoßvorrichtung dazu eingerichtet ist, Wasser aus dem durch das Ventil verbundenen Wassertank durch den Druck, mit dem der Wassertank beaufschlagt ist, auszustoßen und auf dem Kühler oder in einem Zuluftstrom des Kühlers zu verteilen.

Der Wassertank kann mit der Abgasleitung gekoppelt sein. Der Wassertank kann dazu eingerichtet sein, gewonnenes, über die Abgasleitung abgeführtes Wasser zu speichern. Der Wassertank kann stromabwärts der Wassergewinnungsvorrichtung mit der Abgasleitung gekoppelt sein. Der Wassertank ist insbesondere dazu eingerichtet, flüssiges Wasser zu speichern. Der Wassertank kann zum Speichern von durch die Wassergewinnungsvorrichtung gewonnenem flüssigen Wasser dienen.

Die Wasserausstoßvorrichtung ist somit dazu eingerichtet ist, Wasser aus dem durch das Ventil verbundenen Wassertank durch den Druck, mit dem der Wassertank beaufschlagt ist, zu erhalten, auszustoßen und auf dem Kühler oder in einem Zuluftstrom des Kühlers zu verteilen. Indem der Wassertank durch eine Druckquelle mit Druck beaufschlagbar ist, wird der Vorteil erreicht, dass ohne eine Pumpe bzw. unabhängig vom Betrieb einer Pumpe das im Wassertank gespeicherte Wasser durch den Druck, mit dem der Wassertank beaufschlagt ist, aus dem Wassertank der Wasserausstoßvorrichtung zugeführt und ausgestoßen und auf dem Kühler oder in dem Zuluftstrom des Kühlers verteilt werden kann.

Somit braucht in einer Betriebsphase, in der eine besonders hohe Leistung der Brennstoffzelle abgerufen wird und die Brennstoffzelle durch das verteilte Wasser besonders effizient gekühlt werden kann, keine zusätzliche Pumpe betrieben werden, um das Wasser aus dem Wassertank zur Wasserausstoßvorrichtung zu fördern und auszustoßen. Insbesondere bei Leistungsspitzen wird somit ein besonders effizienter Betrieb des Brennstoffzellensystems ermöglicht. Ein druckbeaufschlagter Wassertank kann es beispielsweise ermöglichen, Wasser auf effiziente Weise zu speichern und bei Bedarf für die Kühlung des Kühlers der Kühlvorrichtung zum Kühlen der Brennstoffzelle zur Verfügung zu stellen.

Bei der Druckquelle kann es sich insbesondere um eine Druckluftquelle handeln. Beispielsweise kann Luft, die mit dem Wassertank kommuniziert, beispielsweise Luft, die mit einer freien Oberfläche des im Wassertank gespeicherten Wassers kommuniziert, durch die Druckquelle mit Druck beaufschlagt werden.

Insbesondere kann der Wassertank mit Druckluft druckbeaufschlagbar sein. Dies kann es auch ermöglichen, bei Beendigung einer Fahrt des Fahrzeugs und/oder beim Abschalten des Brennstoffzellensystems die Wasserleitung und/oder die Wasserausstoffvorrichtung mit Luft frei zu blasen und/oder den Wassertank zu entleeren. Dies ist insbesondere vorteilhaft hinsichtlich einer möglichen Vermeidung von Frostschäden durch gefrierendes Restwasser, sowie im Hinblick auf eine Reinigung der Wasserleitung und/oder der Wasserausstoßvorrichtung.

Das Brennstoffzellensystem kann weiter eine Pumpe aufweisen, die dazu eingerichtet ist, von dem Wärmetauscher über die Abgasleitung abgeführtes Wasser in den Wassertank einzuspeisen gegen den Druck, mit dem der Wassertank beaufschlagt ist. Zwischen der Pumpe und dem Wassertank kann beispielsweise ein Ventil angeordnet sein, insbesondere ein Rückschlagventil.

Indem der Wassertank durch eine Druckquelle mit Druck beaufschlagbar ist und die Pumpe zurückgewonnenes Wasser gegen diesen Druck in den Wassertank einspeisen kann, wird nicht nur der Vorteil erreicht, dass unabhängig vom Betrieb der Pumpe das im Wassertank gespeicherte Wasser durch den Druck, mit dem der Wassertank beaufschlagt ist, aus dem Wassertank der Wasserausstoßvorrichtung zugeführt und auf dem Kühler oder in dem Zuluftstrom des Kühlers verteilt werden kann. Gleichzeitig wird auch die vorteilhafte Wirkung erzielt, dass der Wassertank einen Vorrat von Wasser speichern kann. Denn bereits im Wassertank vorhandenem Wasser kann durch die Pumpe gegen den im Wassertank herrschenden Druck zusätzliches aus dem Abgas gewonnenes, flüssiges Wasser zugeführt werden, wenn in einem Betriebsmodus des Brennstoffzellensystems Wasser aus den Abgas der Brennstoffzelle zurückgewonnen wird, und es kann Wasser aus dem Wassertank zur Kühlung des Kühlers verwendet werden, um in einem Betriebsmodus der Brennstoffzelle mit hoher Leistung die Kühlleistung der Kühlvorrichtung zu erhöhen und/oder den Leistungsbedarf für den Betrieb der Kühlvorrichtung zu verringern. Insbesondere wird es ermöglicht, dass die Wasserrückgewinnung und Einspeisung von zurückgewonnenem Wasser in den Wassertank durch die Pumpe unabhängig erfolgen kann von dem Entnehmen von Wasser aus dem Wassertank und Verwenden des entnommenen Wassers durch die Wassersausstoßvorrichtung. Auf diese Weise kann beispielsweise ein Wasservorrat aufgebaut werden, der bei einem Betrieb der Brennstoffzelle mit besonders hohem Kühlbedarf zur Kühlung verwendet werden kann, ohne dass gleichzeitig weiteres Wasser zurückgewonnen werden muss oder die Pumpe arbeiten muss, um dem Wassertank weiteres Wasser zuzuführen. Somit wird bei Leistungsspitzen ein besonders effizienter Betrieb des Brennstoffzellensystems ermöglicht. Auch kann ein längerer Betrieb des Brennstoffzellensystems mit hoher Leistung auch bei hohen Umgebungstemperaturen ermöglicht werden.

Erfindungsgemäß weist das Brennstoffzellensystem weiter eine Steuereinrichtung auf, die für eine Betriebsweise des Brennstoffzellensystems eingerichtet ist, bei der: durch die Steuereinrichtung anhand eines Leistungsplans, der eine Abfolge von geplanten Betriebsphasen mit unterschiedlich hohen Leistungsanforderungen an die Brennstoffzelle umfasst, entsprechend der geplanten Betriebsphasen selektiv Betriebsmodi für das Brennstoffzellensystem ausgewählt werden, die wenigstens einen Betriebsmodus zur Wassergewinnung und wenigstens einen Betriebsmodus zum Wasserausstoß umfassen, wobei in dem wenigstens einen Betriebsmodus zur Wassergewinnung die Wassergewinnungsvorrichtung betrieben wird, um flüssiges Wasser aus dem Abgas zu gewinnen und dem Wassertank zuzuführen, und wobei in dem wenigstens einen Betriebsmodus zum Wasserausstoß Wasser aus dem Wassertank der Wasserausstoßvorrichtung zugeführt wird und von der Wasserausstoßvorrichtung ausgestoßen und auf dem Kühler oder in einem Zuluftstrom des Kühlers verteilt wird.

Gemäß einem dritten Aspekt dieser Beschreibung, welcher nicht Teil der vorliegenden Erfindung ist, wird die Aufgabe gelöst durch ein Brennstoffzellensystem für ein Fahrzeug, aufweisend:
eine Brennstoffzelle, die für eine elektrochemische Reaktion von in Luft enthaltenem Sauerstoff und Wasserstoff ausgelegt ist;
eine Abgasleitung zum Abführen von Wasser enthaltendem Abgas von der Brennstoffzelle;
eine Wassergewinnungsvorrichtung zum Gewinnen von flüssigem Wasser aus dem Abgas;
einen Wassertank, der mit der Wassergewinnungsvorrichtung gekoppelt ist und dazu eingerichtet ist, gewonnenes Wasser zu speichern;
eine Kühlvorrichtung zum Kühlen der Brennstoffzelle, umfassend einen Kühler;
eine Wasserausstoßvorrichtung zum Ausstoßen und Verteilen von Wasser auf dem Kühler oder in einem Zuluftstrom des Kühlers;
eine Wasserleitung, um Wasser aus dem Wassertank der Wasserausstoßvorrichtung zuzuführen; und
eine Steuereinrichtung, die für ein Betriebsverfahren des Brennstoffzellensystems eingerichtet ist, bei dem:
   durch die Steuereinrichtung anhand eines Leistungsplans, der eine Abfolge von geplanten Betriebsphasen mit unterschiedlich hohen Leistungsanforderungen an die Brennstoffzelle umfasst, entsprechend der geplanten Betriebsphasen selektiv Betriebsmodi für das Brennstoffzellensystem ausgewählt werden, die wenigstens einen Betriebsmodus zur Wassergewinnung und wenigstens einen Betriebsmodus zum Wasserausstoß umfassen,
   wobei in dem wenigstens einen Betriebsmodus zur Wassergewinnung die Wassergewinnungsvorrichtung betrieben wird, um flüssiges Wasser aus dem Abgas zu gewinnen und dem Wassertank zuzuführen, und
   wobei in dem wenigstens einen Betriebsmodus zum Wasserausstoß Wasser aus dem Wassertank der Wasserausstoßvorrichtung zugeführt wird und von der Wasserausstoßvorrichtung ausgestoßen und auf dem Kühler oder in einem Zuluftstrom des Kühlers verteilt wird.

Die Steuereinrichtung kann zur Steuerung und/oder Durchführung des Betriebsverfahrens eingerichtet sein. Die Steuereinrichtung kann dazu eingerichtet sein, einen Betrieb der Wassergewinnungsvorrichtung und der Wasserausstoßvorrichtung gemäß dem Betriebsverfahren zu steuern.

In dem wenigstens einen Betriebsmodus zur Wassergewinnung kann beispielsweise die Wasserausstoßvorrichtung durch die Steuereinrichtung betrieben werden. In der wenigstens einen Betriebsphase zum Wasserausstoß kann beispielsweise durch die Steuereinrichtung gesteuert Wasser aus dem Wassertank der Wasserausstoßvorrichtung zugeführt werden und von der Wasserausstoßvorrichtung ausgestoßen und auf den Kühler oder in einen Zuluftstrom des Kühlers verteilt werden.

Der Leistungsplan kann eine voraussichtliche Abfolge von geplanten Betriebsphasen mit unterschiedlich hohen Leistungsanforderungen an die Brennstoffzelle umfassen. Das Betriebsverfahren kann auch als prädiktive Betriebsweise oder als prädiktives Betriebsverfahren bezeichnet werden.

Durch das beschriebene Betriebsverfahren kann eine Kapazität des Wassertanks besonders gut genutzt werden, um in einer durch den Leistungsplan vorausgeplanten Weise zwischen einem Betriebsmodus zur Wassergewinnung und einem Betriebsmodus zum Wasserausstoß zu wechseln. Beispielsweise kann entsprechend einer geplanten Betriebsphase mit relativ hoher Leistungsanforderung an die Brennstoffzelle ein Betriebsmodus zum Wasserausstoß ausgewählt werden, um durch die Verdunstungskühlung des Wassers eine Erhöhung der Kühlleistung der Kühlvorrichtung für die Brennstoffzelle zu bewirken. Auf diese Weise kann beispielsweise für eine geplante Dauer der Aufrechterhaltung des Betriebsmodus eine voraussichtlich benötigte Menge von Wasser im Wassertank gesammelt und bereitgestellt werden. Insgesamt kann durch die gezieltere Nutzung des Wassertanks ein energieeffizienterer Betrieb des Fahrzeugs ermöglicht werden. Außerdem kann die Menge des zu gewinnenden Wassers basierend auf dem Leistungsplan auf ein ausreichendes Maß begrenzt werden. Eine unnötige Gewinnung von nicht benötigtem, überschüssigem Wasser kann vermieden werden.

Beispielsweise kann die Steuereinrichtung dazu eingerichtet sein, gemäß dem ausgewählten Betriebsmodus den Abgaskühler anzusteuern, ein Ventil zu steuern, mit dem ein Strom des Kühlmediums durch den Kühlpfad (über den Wärmetauscher) gesteuert werden, den Betrieb des Abgaskühlers durch Steuern dieses Ventils zu steuern, die Wasserausstoßvorrichtung anzusteuern, das/ein Ventil der Wasserleitung anzusteuern, über welches der Wassertank mit der Wasserausstoßvorrichtung verbindbar ist, und/oder eine/die Pumpe anzusteuern, die dazu eingerichtet ist, von dem Wärmetauscher über die Abgasleitung abgeführtes Wasser in den Wassertank einzuspeisen, und/oder eine/die Pumpe anzusteuern, die mit dem Wassertank verbindbar ist und dazu eingerichtet ist, Wasser in Richtung von der Wassergewinnungsvorrichtung oder Abgasleitung zu der Wasserausstoßvorrichtung zu fördern und/oder eine/die Pumpe anzusteuern, die dazu eingerichtet ist, Wasser von dem Wassertank zu der Wasserausstoßvorrichtung abzuführen.

Den jeweiligen geplanten Betriebsphasen können jeweilige Betriebsmodi zugeordnet sein oder durch die Steuereinrichtung zugeordnet werden. Die Steuereinrichtung kann beispielsweise einen Betriebsmodus entsprechend einer Leistungsanforderung an die Brennstoffzelle der betreffenden Betriebsphase auswählen.

Die Steuereinrichtung kann beispielsweise dazu eingerichtet sein, entsprechend der geplanten Betriebsphasen selektiv die Betriebsmodi für das Brennstoffzellensystem auszuwählen, wobei, wenn das Fahrzeug eine der geplanten Betriebsphasen erreicht, ein entsprechender Betriebsmodus für das Brennstoffzellsystem ausgewählt wird.

Der Leistungsplan kann beispielsweise in Abhängigkeit von einem Ortsverlauf des Fahrzeugs und/oder von einem Zeitverlauf eine Leistungsanforderung an die Brennstoffzelle bestimmen. Der Verlauf des Ortes oder der Verlauf der Zeit können beispielsweise bezogen auf einen Aufenthaltsort des Fahrzeugs an einem bestimmten Zeitpunkt angegeben sein. Der Leistungsplan kann beispielsweise einen Streckenplan für die Leistung und/oder einen Zeitplan für die Leistung umfassen. Der Leistungsplan kann beispielsweise Streckenabschnitten und/oder Zeitabschnitten mit unterschiedlich hohen Leistungsanforderungen an die Brennstoffzelle umfassen.

Somit kann beispielsweise einem Streckenabschnitt oder einem Zeitabschnitt, auf dem eine Bergauffahrt vorgesehen ist, ein entsprechender Betriebsmodus zum Wasserausstoß zugeordnet werden und durch die Steuereinrichtung ausgewählt werden. Dadurch kann auf einer Bergauffahrt in vorausgeplanter Weise aus dem im Wassertank bereitgestelltem, gesammelten Wasser die Wasserausstoßvorrichtung betrieben werden, um den Kühler der Kühlvorrichtung für die Brennstoffzelle zu kühlen. Beispielsweise können die Betriebsphasen des Ablaufs nach Zeiten und/oder Orten geordnet sein. Beispielsweise kann der Leistungsplan Leistungsanforderungen oder Betriebsphasen in Abhängigkeit vom Ort und/oder von der Zeit darstellen (repräsentieren).

Erfindungsgemäß umfasst der wenigstens eine Betriebsmodus zum Wasserausstoß einen Betriebsmodus zum Wasserausstoß, in welcher die Wassergewinnungsvorrichtung nicht aktiv betrieben wird. Auf diese Weise kann bei einer besonders hohen Leistungsanforderung an die Brennstoffzelle ein Energieaufwand für den Betrieb der Wassergewinnungsvorrichtung vermieden oder verringert werden. Unter einem aktiven Betreiben wird ein gesteuertes Betreiben verstanden.

Die Steuereinrichtung kann dazu eingerichtet sein, den Leistungsplan während einer Fahrt des Fahrzeugs basierend auf einer aktuellen Bewegung des Fahrzeugs anzupassen, insbesondere basierend auf einem aktuellen Bewegungsfortschritt des Fahrzeugs. Beispielsweise kann der Leistungsplan basierend auf einer aktuellen Geschwindigkeit des Fahrzeugs oder basierend auf einer Zeitdauer eines Stillstands des Fahrzeugs angepasst werden. Somit wird eine fortlaufende Aktualisierung des Leistungsplans während einer Fahrt des Fahrzeugs ermöglicht.

Die Merkmale gemäß der obigen Beschreibung des dritten Aspekts können mit den Merkmalen gemäß der anderen Aspekte kombiniert werden.

Bei dem oben genannten nicht erfindungsgemäßen zweiten oder dritten Aspekt dieser Beschreibung kann die Wassergewinnungsvorrichtung optional einen oder den Abgaskühler aufweisen, umfassend einen oder den Wärmetauscher, der an der Abgasleitung angeordnet ist und dazu eingerichtet ist, durch Übertragen von Wärme von dem Abgas an einen Strom eines Kühlmediums das in der Abgasleitung über den Wärmetauscher geführte Abgas zu kühlen und in dem Abgas enthaltenes Wasser zu kondensieren, wobei das dem Wärmetauscher mit dem Abgas zugeführte Wasser einschließlich des daraus kondensierten Wassers über die Abgasleitung von dem Wärmetauscher abgeführt wird. Der Wassertank kann beispielsweise stromabwärts des Wärmetauschers über die Pumpe mit der Wassergewinnungsvorrichtung und/oder mit der Abgasleitung gekoppelt sein. Der Abgaskühler kann dem oben beschriebenen Abgaskühler entsprechen.

Das Brennstoffzellensystem gemäß jedem der oben erläuterten Aspekte kann in vorteilhafter Weise mit den nachfolgend beschriebenen Merkmalen kombiniert werden.

Der Kühler der Kühlvorrichtung zum Kühlen der Brennstoffzelle kann einen Lüfterantrieb aufweisen. Der Kühler kann beispielsweise einen von dem Lüfterantrieb angetriebenen Lüfter aufweisen. Der Lüfter kann dazu eingerichtet sein, einen Luftstrom über/durch den Kühler zu erzeugen. Der Luftstrom stromaufwärts des Kühlers kann als Zuluftstrom des Kühlers bezeichnet werden. Das Brennstoffzellensystem kann eine/die Steuereinrichtung umfassen, die für einen Betriebsmodus zum Wasserausstoß eingerichtet ist, bei der die Wasserausstoßvorrichtung Wasser ausstößt und auf den Kühler oder in einem Zuluftstrom des Kühlers verteilt, und bei der die Steuereinrichtung eine Leistung des Lüfterantriebs des Kühlers steuert. Die Steuereinrichtung kann beispielsweise die Leistung des Lüfterantriebs des Kühlers steuern in Abhängigkeit davon, ob ein Wasserausstoß erfolgt. Die Steuereinrichtung kann beispielsweise die Leistung des Lüfterantriebs des Kühlers unter Berücksichtigung einer kühlenden Wirkung des verteilten Wassers steuern. Die Steuereinrichtung kann beispielsweise eine Leistung des Lüfterantriebs des Kühlers in Abhängigkeit von einer Leistungsanforderung an die Brennstoffzelle und/oder unter Berücksichtigung einer kühlenden Wirkung des verteilten Wassers steuern. Somit wird es ermöglicht, gegenüber einem Betrieb des Lüfterantriebs ohne Wasserausstoß eine Leistung des Lüfterantriebs des Kühlers zu verringern und/oder die Kühlleistung des Kühlers zu erhöhen. Da bei einer Brennstoffzelle ein hoher Anteil der Abwärme durch eine Kühlvorrichtung der Brennstoffzelle abgeführt werden muss, lässt sich somit durch eine Steuerung des Lüfterantriebs unter Berücksichtigung des Wasserausstoßes die elektrische Leistungsanforderung des Lüfterantriebs erheblich vermindern und dadurch die Effizienz des Brennstoffzellensystems erheblich verbessern.

Das Brennstoffzellensystem kann weiter einen Gas-Flüssigkeits-Abscheider aufweisen, der mit der Abgasleitung verbunden ist und aus dem aus dem Abgas abgeschiedenes Wasser dem Wassertank zuführbar ist. Der Gas-Flüssigkeits-Abscheider kann beispielsweise stromaufwärts des Wassertanks angeordnet sein. Der Gas-Flüssigkeits-Abscheider kann stromabwärts des Abgaskühlers und/oder stromabwärts des Wärmetauschers des Abgaskühlers angeordnet sein. Der Gas-Flüssigkeits-Abscheider kann in der Abgasleitung und/oder in dem Wärmetauscher integriert sein. Im Gas-Flüssigkeits-Abscheider aus dem Abgas abgeschiedenes Gas kann beispielsweise an die Umgebung abgegeben werden. Der Gas-Flüssigkeits-Abscheider kann mit einem Wasserspeicher oder Wasserzwischenspeicher verbunden sein, um aus dem Abgas abgeschiedenes Wasser zwischenzuspeichern. Der Wasserspeicher kann stromaufwärts des Wassertanks angeordnet sein. Der Gas-Flüssigkeits-Abscheider kann beispielsweise über eine/die Pumpe mit dem Wassertank verbunden sein, wobei die Pumpe dazu eingerichtet ist, im Gas-Flüssigkeits-Abscheider aus dem Abgas abgeschiedenes Wasser dem Wassertank zuzuführen. Der optionale Wasserspeicher kann beispielsweise zwischen dem Gas-Flüssigkeits-Abscheider und der Pumpe angeordnet sein.

Zwischen einer/der stromaufwärts des Wassertanks angeordneten Pumpe und dem Wassertank kann beispielsweise ein Ventil angeordnet sein, insbesondere ein Rückschlagventil.

An der Abgasleitung kann ein Abzweigventil angeordnet sein, um überschüssiges gasförmiges Abgas aus der Abgasleitung abzuzweigen. Das abgezweigte Abgas kann beispielsweise an die Umgebung abgegeben werden.

Die Wasserleitung zum Zuführen von Wasser aus dem Wassertank zu der Wasserausstoßvorrichtung kann beispielsweise ein Ventil aufweisen, über welches der Wassertank mit der Wasserausstoßvorrichtung verbindbar ist. Die Steuereinrichtung kann beispielsweise dazu eingerichtet sein, dieses Ventil anzusteuern, um ein Ausstoßen und Verteilen des Wassers auf den Kühler oder in einen Zuluftstrom des Kühlers zu steuern. Wenn eine Pumpe vorgesehen ist, um aus dem Wassertank Wasser der Wasserausstoßvorrichtung zuzuführen, kann die Steuereinrichtung dazu eingerichtet sein, diese Pumpe anzusteuern, um das Ausstoßen und Verteilen des Wassers auf den Kühler oder in einen Zuluftstrom des Kühlers zu steuern.

Wenn der Wassertank durch eine Druckwelle mit Druck beaufschlagbar ist, kann die Druckquelle beispielsweise ein Druckluftquelle sein. Beispielsweise kann das Brennstoffzellensystem ein Ventil umfassen, über das die Druckluftquelle mit dem Wassertank verbindbar ist. Die Steuereinrichtung kann beispielsweise dazu eingerichtet sein, dieses Ventil zu steuern.

Der Wassertank kann beispielsweise mit einem Entleerungsventil verbunden sein, um bei Bedarf den Wassertank leeren zu können. Die Steuereinrichtung kann beispielsweise dazu eingerichtet sein, das Entleerungsventil zu steuern, ggf. in Abhängigkeit von der Umgebungstemperatur. Dadurch kann beispielsweise ein Gefrieren des im Wassertank gespeicherten Wassers nach Ende einer Fahrt des Fahrzeugs verhindert werden.

Der Wassertank kann beispielsweise mit einem Druckablassventil verbunden sein. Das Druckablassventil kann dazu eingerichtet sein, einen Druck von mit dem Wasser im Wassertank kommunizierender Luft abzubauen. Die Steuereinrichtung kann beispielsweise dazu eingerichtet sein, das Druckablassventil bei einer Beendigung einer Fahrt des Fahrzeugs, beispielsweise bei einem Abschalten des Fahrzeugantriebs, zu öffnen, um den Druck am Drucktank abzulassen. Dadurch kann beispielsweise ermöglicht werden, den Wassertank über einen Verschluss mit von außen zugeführtem Wasser zu befüllen oder seine Befüllung zu ergänzen. Bei Fahrten mit langen Betriebsphasen hoher Leistungsanforderung an die Brennstoffzelle kann somit von außen, etwa von einem Fahrer während einer Fahrunterbrechung, zugeführtes Wasser für die Wasserausstoßvorrichtung verwendet werden, um den Kühler der Kühlvorrichtung für die Brennstoffzelle zu kühlen.

Als Druckquelle oder Druckluftquelle kann insbesondere ein Luftkompressor verwendet werden.

Als Druckquelle kann eine im Fahrzeug vorhandene Druckluftanlage verwendet werden, beispielsweise eine Pneumatik-Druckluftanlage, die beispielsweise zum Betrieb einer Bremsanlage des Fahrzeugs und/oder zur Schaltung eines Getriebes des Fahrzeugs vorgesehen ist. Dadurch kann eine Druckquelle insbesondere bei großen Nutzfahrzeugen ohne weiteres für die Druckbeaufschlagung des Wassertanks zur Verfügung gestellt werden.

Das beschriebene Betriebsverfahren kann bei der Brennstoffzellenvorrichtung gemäß den beschriebenen Ausführungsformen verwendet werden. Zusätzlich oder darüber hinaus kann eine Regelung des Betriebs der Wassergewinnungsvorrichtung und/oder der Wasserausstoßvorrichtung in Abhängigkeit von einer aktuellen Leistungsanforderung an die Brennstoffzelle und/oder eine aktuell benötigte Kühlleistung der Kühlvorrichtung erfolgen. Beispielsweise kann die Steuereinrichtung dazu eingerichtet sein, wenn die angeforderte Brennstoffzellenleistung der Brennstoffzelle einen Schwellwert von beispielsweise 70% der maximalen Brennstoffzellenleistung unterschreitet, einen Betriebsmodus zur Wassergewinnung einzuschalten, bei dem die Wassergewinnungsvorrichtung aktiv betrieben wird. Bei Überschreitung eines oberen Grenzwerts von beispielsweise 80% der maximalen Brennstoffzellenleistung kann beispielsweise in einen Betriebsmodus zum Wasserausstoß durch die Wasserausstoßvorrichtung geschaltet werden.

### Kurze Beschreibung der Zeichnungen

Die Erfindung wird im Folgenden anhand von Figuren im Detail beschrieben. In den Figuren zeigt:
- Fig. 1: eine schematische Darstellung eines Brennstoffzellensystems gemäß Ausführungsformen der der vorliegenden Offenbarung;
- Fig. 2: eine schematische Darstellung eines schematischen Beispiels eines Abgaskühlers gemäß Ausführungsformen der Erfindung;
- Fig. 3: eine schematische Darstellung eines weiteren Beispiels eines Abgaskühlers gemäß Ausführungsformen der Erfindung;
- Fig. 4: eine schematische Darstellung einer Wassersprühvorrichtung gemäß Ausführungsformen der Erfindung;
- Fig. 5: ein Betriebsverfahren des Brennstoffzellensystems gemäß Ausführungsformen der Erfindung; und
- Fig. 6: einen Graphen, der schematisch eine Kondensationsrate in Abhängigkeit von einer Abgastemperatur angibt.

### Detaillierte Beschreibung

Im Folgenden werden, sofern nicht anders vermerkt, für gleiche und gleichwirkende Elemente dieselben Bezugszeichen verwendet.

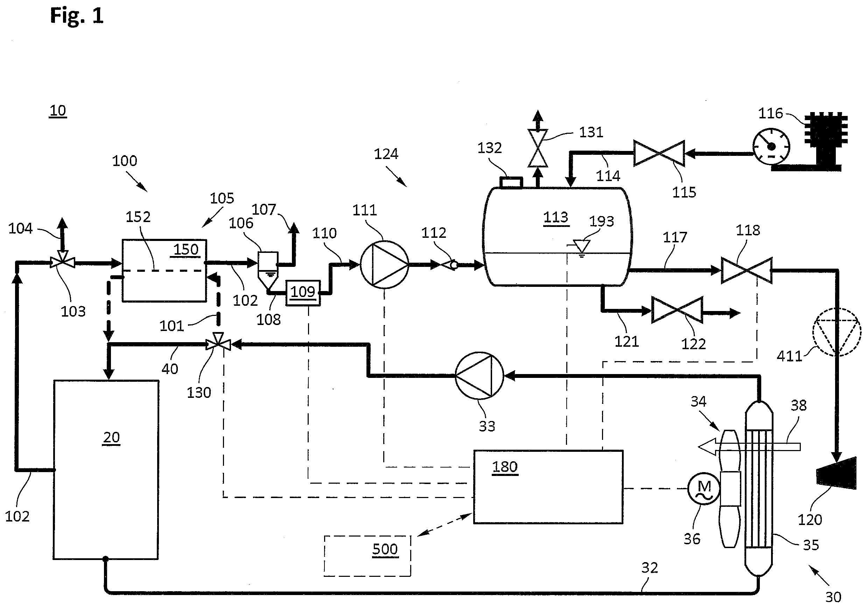

Fig. 1 zeigt eine schematische Darstellung eines Brennstoffzellensystems 10 für ein Fahrzeug gemäß Ausführungsformen der vorliegenden Offenbarung. Das Brennstoffzellensystem 10 umfasst eine Brennstoffzelle 20 und eine Kühlvorrichtung 30 für die Brennstoffzelle 20. Die Kühlvorrichtung 30 umfasst einen Kühlkreislauf 32 mit einer Pumpe 33, einem Kühler 35 und einem an dem Kühler 35 angeordneten Lüfter 34. Die Pumpe 33 ist dazu eingerichtet, ein in dem Kühlkreislauf 32 enthaltenes Kühlmedium durch die Brennstoffzelle 20 und den Kühler 35 zu pumpen.

Der Lüfter 34 umfasst einen Lüfterantrieb 36. Der Lüfter 34 ist dazu eingerichtet, einen Kühlluftstrom 38 über oder durch den Kühler 35 zu erzeugen, um durch Wärmetausch mit dem Kühlmedium das Kühlmedium zu kühlen und so Abwärme der Brennstoffzelle 20 über den Kühlkreislauf 32 an die Umgebungsluft im Kühlluftstrom 38 abzugeben.

Das Brennstoffzellensystem 10 umfasst eine Wassergewinnungsvorrichtung 100 mit einer Abgasleitung 102 zum Abführen von Wasser enthaltenden Abgas von der Brennstoffzelle 20, einen Abgaskühler 105, einen Gas-Flüssigkeits-Abscheider 106, einen Wasserspeicher 109 sowie einer Hochdruckpumpe 111, die in dieser Reihenfolge miteinander gekoppelt sind. Über ein schaltbares Abzweigventil 103 kann der Abgasstrom von der Brennstoffzelle 20 durch die Abgasleitung 102 dem Abgaskühler 105 zugeführt werden. Je nach Schaltstellung des Abzweigventils 103 kann ein Teil des Abgasstroms über eine Auslassleitung 104 an die Umgebung ausgelassen werden.

Der Abgaskühler 105 umfasst einen Wärmetauscher 150, der an der Abgasleitung 102 angeordnet ist. Die Abgasleitung 102 ist durch den Wärmetauscher 150 geführt. Weiter ist ein Sekundärpfad 101 des Kühlkreislaufs 32 durch den Wärmetauscher 150 geführt. Das Kühlmedium des Kühlkreislaufs 32 und das über die Abgasleitung 102 geführte Abgas der Brennstoffzelle 20 stehen über eine wärmedurchlässige Wand 152 des Wärmetauschers 150 in Wärmeaustausch miteinander. Der Kühlkreislauf 32 umfasst ein steuerbares, beispielsweise stufenlos schaltbares Ventil 130, an welchem der Sekundärpfad 101 von dem Hauptpfad oder Primärpfad 40 des Kühlkreislaufs 32 abzweigt. Der Betrieb des Wärmetauschers 150 und somit des Abgaskühlers 105 ist somit über das steuerbare Ventil 130 steuerbar.

Der Gas-Flüssigkeits-Abscheider 106 ist über eine Rohrleitung 108 mit dem Wasserspeicher 109 verbunden. Ein verbleibender Wasserdampf kann über eine Auslassleitung 107 an die Umgebung abgegeben werden.

Die Hochdruckpumpe 111 ist über eine Rohrleitung 110 mit dem Wasserspeicher 109 verbunden. Sie ist Teil eines Verdunstungskühlungssystems 124 zum Kühlen des Kühlers 35 des Kühlkreislaufs 32. Das Verdunstungskühlungssystem 124 umfasst weiter einen druckbeaufschlagbaren Wassertank 113 und eine mit diesem verbindbare Wasserausstoßvorrichtung 120. Der Wassertank 113 ist über eine Rohrleitung 114 und ein Ventil 115, welches an der Rohrleitung 114 angeordnet ist, durch eine Druckquelle 116 in Form eines Luftkompressors oder Luftpressers mittels Druckluft druckbeaufschlagbar. Die Hochdruckpumpe 111 ist über ein Rückschlagventil 112 mit dem Wassertank 113 verbunden und dazu eingerichtet, unter Überwindung des Drucks, mit dem der Wassertank 113 beaufschlagt ist, Wasser aus dem Wasserspeicher 109 durch das Rückschlagventil 112 dem Wassertank 113 zuzuführen.

Ein Ausgang des Wassertanks 113 ist über eine Wasserleitung 117 und ein schaltbares Ventil 118, welches an der Wasserleitung 117 angeordnet ist, mit der Wasserausstoßvorrichtung 120 verbunden. Weiter ist der Wassertank 113 an einer Ablassöffnung 121 mit einem Ablassventil 122 verbunden, um bei Bedarf das im Wassertank 113 enthaltene Wasser abzulassen. Am Wassertank 113 ist weiter ein Druckablassventil 131 zum Ablassen der Druckluft sowie ein Verschluss 132 zum manuellen Befüllen des Wassertanks 113 angeordnet.

Eine Steuereinrichtung 180 zur Steuerung des Brennstoffzellensystems 10 ist insbesondere mit den steuerbaren Ventilen 103, 130, 115, 118, 122, 130 zum Steuern derselben verbunden und ist dazu eingerichtet, die Hochdruckpumpe 111 und den Lüfterantrieb 36 zu steuern. Die Steuereinrichtung 180 kann weiter mit Sensoren 193 zum Erfassen eines Füllstands im Wasserspeicher 109 und /oder im Wassertank 113 verbunden sein.

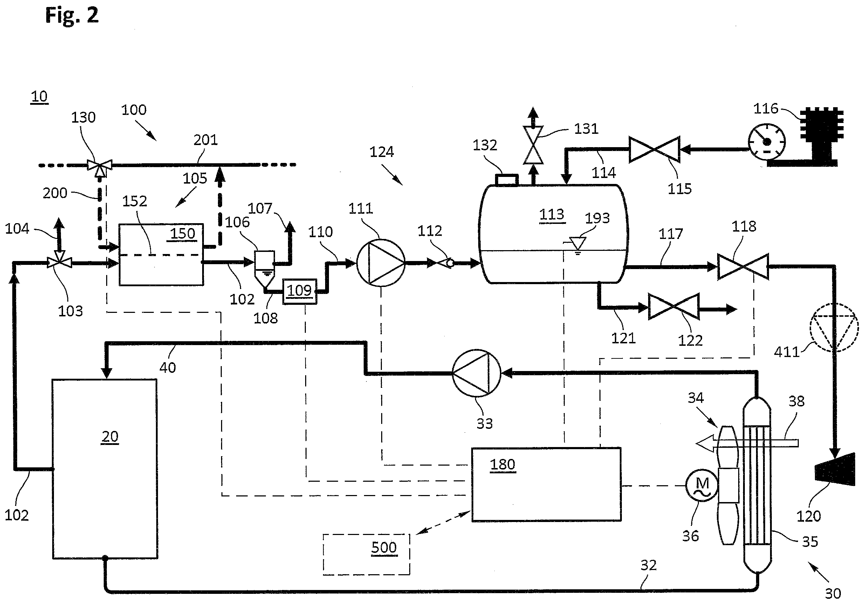

Fig. 2 zeigt schematisch ein Ausführungsbeispiel, bei dem der Abgaskühler 105 einen Wärmetauscher 150 umfasst, der mit einem Sekundärpfad 200 eines zweiten Kühl- oder Kältekreislaufs 201 des Fahrzeugs (beispielsweise einer Klimaanlage, einer Batterie-Kühlung oder einer Kühlung eines Nebenaggregats wie z.B. DC-DC-Wandler, Bordnetzzwischenwandler, elektrische Maschinen, Inverter) verbindbar ist anstelle des Sekundärpfads 101. Der Sekundärpfad 200 ist wiederum durch ein steuerbares, insbesondere stufenlos schaltbares Ventil 130 mit dem zweiten Kühl- oder Kältekreislauf 201 verbindbar. Das Brennstoffzellensystem kann im Übrigen wie das Brennstoffzellensystem 10 der Fig. 1 aufgebaut sein.

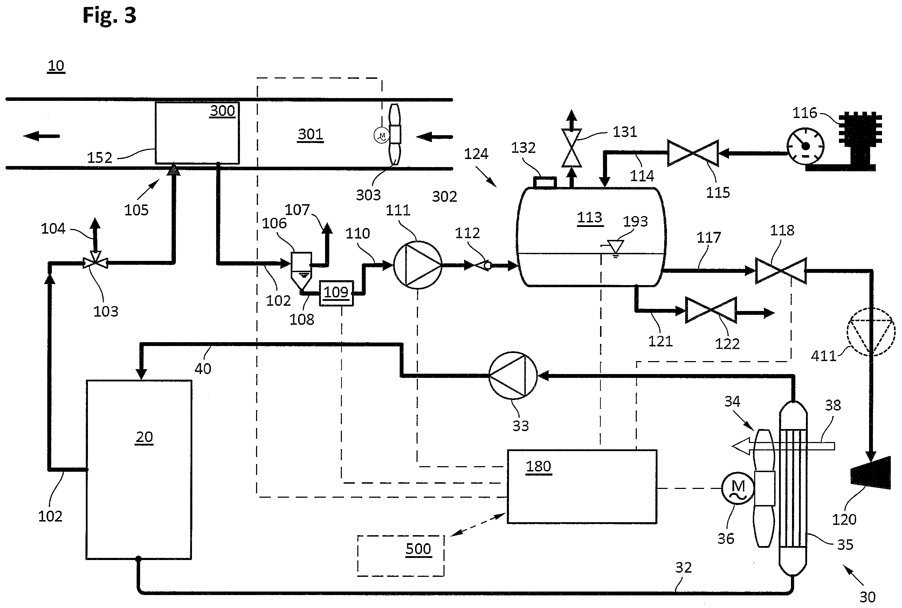

Fig. 3 zeigt schematisch ein Ausführungsbeispiel, bei dem der Abgaskühler 105 einen Wärmetauscher 300 umfasst, der dazu eingerichtet ist, Wärme von dem die Abgasleitung 102 durchströmenden Abgas der Brennstoffzelle 20 über eine Wand 152 an einen Strom von Umgebungsluft abzugeben, die hier als Kühlmedium für den Wärmetauscher 300 verwendet wird. Der Wärmetauscher 300 kann beispielsweise in oder an einem Luftkanal 301 angeordnet sein. In dem Luftkanal 301 kann eine erzwungene Luftströmung beispielsweise durch einen Lüfter 303 erzeugt werden. Der Wärmetauscher 300 kann beispielsweise auch durch einen Fahrtwind gekühlt werden, und der Wärmetauscher 300 kann beispielsweise frei am Fahrzeug angeordnet werden, das heißt ohne Luftkanal 301, etwa am Unterboden des Fahrzeugs. Im Falle eines Luftkanals 301 oder Lüfters 303 kann eine Steuerung des Abgaskühlers 105 durch die Steuereinrichtung 180 beispielsweise durch Steuerung des Lüfters 303 und/oder durch Steuerung von Luftklappen erfolgen. Das Brennstoffzellensystem kann im Übrigen wie das Brennstoffzellensystem 10 der Fig. 1 aufgebaut sein.

Bei den beschriebenen Ausführungsbeispielen kann eine Steuerung des Abgaskühlers 105 auch durch Ansteuerung des Abzweigventils 103 erfolgen, indem beispielsweise der Abgasstrom dem Abgaskühler 105 vollständig, teilweise und/oder nicht zugeführt wird. Eine Steuerung der Wassergewinnungsvorrichtung 100 kann beispielsweise durch Steuerung des Betriebs des Abgaskühlers 105 erfolgen und/oder beispielsweise durch Steuerung des Betriebs der Hochdruckpumpe 111. Überschüssiges Abgas oder überschüssiges Wasser im Abgas kann beispielsweise durch die Auslassleitung 107 vom Gas-Flüssigkeits-Abscheider 106 abgegeben werden.

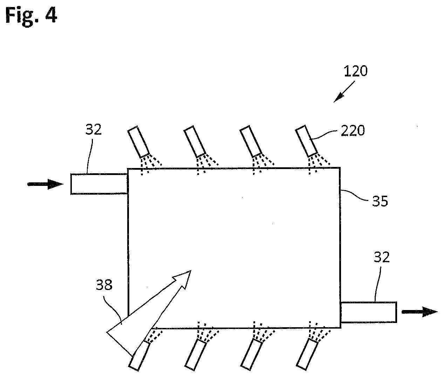

Fig. 4 zeigt schematisch die Wasserausstoßvorrichtung 120 gemäß Ausführungsformen der Erfindung. Die Wasserausstoßvorrichtung 120 ist beispielsweise als Wassersprühvorrichtung ausgeführt und umfasst eine oder mehrere Düsen 220 zum Versprühen des Wassers auf den Kühler 35, beispielsweise auf Kühllamellen oder eine Oberfläche des Kühlers 35, sowie in den Zuluftstrom des Kühlers 35. Bei dem Zuluftstrom handelt es sich um den einlassseitigen Teil des Kühlluftstroms 38. Wie in Fig. 4 schematisch gezeigt ist, wird der Kühler 35 als Teil des Kühlkreislaufs 32 von dem Kühlmedium durchströmt. Das Kühlmedium gibt dabei durch Wärmetausch Wärme an den Kühlluftstrom 38 ab. Durch das auf- bzw. eingesprühte Wasser können die folgenden physikalischen Mechanismen eine Steigerung der Kühlleistung des Kühlers 35 bewirken: Eine Verdunstung (nicht-adiabatisch) von Wasser auf der Kühleroberfläche, gleichzeitig mit einer Wärmeübertragung vom Kühler 35 auf das Wasser; eine Verdunstung (adiabatisch) im Luftstrom 38, wobei die Lufteintrittstemperatur des Kühlluftstroms 38 am Kühler 35 sinkt; und eine Steigerung der Wärmekapazität des in den Kühler eintretenden, mit Wasser angereicherten Kühlluftstroms 38.

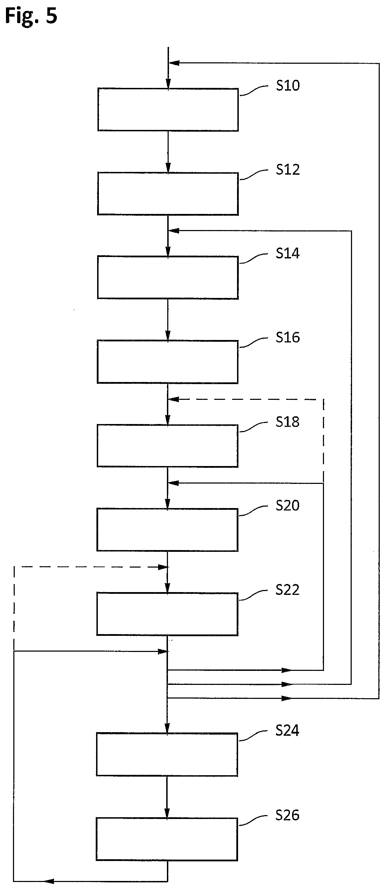

Fig. 5 zeigt schematisch ein Betriebsverfahren des Brennstoffzellensystems 10 gemäß Ausführungsformen der Erfindung, gesteuert von der Steuereinrichtung 180.

Basierend auf einer vorgegebenen Route oder einer gewöhnlich vom Fahrzeug gefahrenen Route wird eine aktuelle Route bestimmt, die mit hoher Wahrscheinlichkeit gefahren wird. Basierend auf dieser Routenplanung (S10) und basierend auf Fahrzeugdaten wie beispielsweise einer Fahrzeugmasse und einer aktuellen und/oder zu erwartenden Umgebungstemperatur wird ein Streckenplan bestimmt (S12). Der Streckenplan umfasst Streckendaten in Abhängigkeit von einem Ort s und einer Zeit t des Fahrzeugs, beispielsweise die am Ort s und der Zeit t zu erwartende Steigung der Fahrbahn und/oder eine zu erwartende Fahrgeschwindigkeit am Ort s und zur Zeit t. Die Streckendaten können beispielsweise auch anhand von Witterungsdaten oder Wetterdaten, beispielsweise der Umgebungstemperatur, und anhand von Daten über die Verkehrssituation auf der geplanten Route angepasst werden. Diese Daten können beispielsweise aus cloudbasierten Diensten oder einem Infotainmentsystem des Fahrzeugs bezogen werden. Die Schritte S10 und S12 können zusammengefasst werden, indem der Streckenplan bei der Routenplanung bestimmt wird.

Basierend auf dem bestimmten Streckenplan sowie beispielsweise zusätzlich basierend auf einer zu erwartenden Umgebungstemperatur T_{amb}(t) in Abhängigkeit von der Zeit t, bzw. einer zu erwartenden Umgebungstemperatur T_{amb}(s, t) in Abhängigkeit von der Zeit t und dem Ort s, sowie basierend auf den Fahrzeugdaten erfolgt eine prädiktive Bestimmung (S14) eines Leistungsplans. Der Leistungsplan kann beispielsweise als zu erwartende Sollleistung der Brennstoffzelle in Abhängigkeit des Fahrzeugortes s und der Zeit t als P_{BZ,soll}(s,t) angegeben werden, beispielsweise als Abfolge geplanter Betriebsphasen zu bestimmten Zeiten t und zugehörigen Orten s mit unterschiedlichen hohen Leistungsanforderungen P_{BZ,soll} an die Brennstoffzelle.

Anhand des Leistungsplans erfolgt die Bestimmung eines Kühlleistungsplans (S16), der entsprechend einen Ablauf von geplanten Betriebsphasen unterschiedlich hoher Kühlsollleistungen der Kühlvorrichtung 30 für die Brennstoffzelle 20 umfasst. Die Sollkühlleistung kann angegeben werden als P_{kühl,soll(}s,t). Aus dem Kühlleistungsplan wird, in Abhängigkeit von der zu erwartenden Umgebungstemperatur, eine von der Wasserausstoßvorrichtung 120 bis zu einem Ort s und einer Zeit t benötigte Wassermenge bestimmt, beispielsweise als Integral über den benötigten Wassermassestrom m, welches als ∫ṁ(s,t)_{Aufdüsen,soll} beschrieben werden kann (S18). Daraus, oder in entsprechender Weise, wird eine zu gewinnende oder zu generierende Wassermenge der Wassergewinnungsvorrichtung 100 in Abhängigkeit vom Ort s und der Zeit t bestimmt als ∫ṁ(s,t)_{Generierung,soll} (S20). Beispielsweise kann die Verdunstungskühlvorrichtung 124 dazu ausgelegt sein, für eine maximale Kühlleistung durch Verdunstungskühlung einen Wasserausstoß der Wasserausstoßvorrichtung 120 von beispielsweise 50 ml/s zu erzeugen. Der Wassertank 113 kann beispielsweise eine Wasserkapazität von 200 Liter aufweisen.

Während der Fahrt des Fahrzeugs kann zusätzlich eine Überprüfung erfolgen, ob der von dem Abgaskühler 105 im Wärmetauscher zum Kühlen verwendete Kühlkreislauf 32 oder Kühl- oder Kältekreislauf 201 aktuelle Restkapazität zum Kühlen hat (S22), und es kann basierend auf dem Ergebnis eine Anpassung der bestimmten benötigten Wassermengen zum Ausstoßen und/oder zur Generierung erfolgen.

Je nach dem bestimmten Wert der aktuell zu generierenden Wassermenge, und gegebenenfalls angepasst anhand der bestimmten Restkapazität des betreffenden Kühlkreislaufs, erfolgt durch die Steuereinrichtung 180 eine selektive Auswahl (S24) eines Betriebsmodus für das Brennstoffzellensystem 10. Dabei können insbesondere folgende Betriebsmodi entsprechend der benötigten Wassermenge, und somit entsprechend der modellprädiktiv bestimmten Leistungsanforderungen an die Brennstoffzelle gemäß dem Leistungsplan, ausgewählt werden: ein erster Betriebsmodus entsprechend einer deaktivierten Wassergewinnungsvorrichtung 100; ein zweiter Betriebsmodus entsprechend einem aktiven Betrieb der Wassergewinnungsvorrichtung 100 zum Gewinnen von flüssigem Wasser aus dem Abgas der Brennstoffzelle und Zuführen des gewonnenen Wassers zu dem Wassertank 113; und ein dritter Betriebsmodus zum Wasserausstoß, bei dem ein Wasserausstoß durch die Wasserausstoßvorrichtung 120 erfolgt und dadurch die Kühlleistung des Kühlers 35 für die Kühlvorrichtung zum Kühlen der Brennstoffzelle 20 gesteigert wird.

Die Steuereinrichtung 180 steuert das Brennstoffzellensystem 10 gemäß dem ausgewählten Betriebsmodus (S26). Insbesondere kann die Steuereinrichtung 180 gemäß dem ausgebildeten Betriebsmodus die Wassergewinnungsvorrichtung 100 steuern, insbesondere den Abgaskühler 105 und /oder die Hochdruckpumpe 111, und die Steuereinrichtung 180 kann die Wasserausstoßvorrichtung 120 beispielsweise durch Steuerung des Ventils 118 ansteuern. Für die Überprüfung der aktuellen Betriebsphase und Auswahl der nächsten Betriebsphase erfolgt ein Rücksprung zu Schritt S22 oder vor Schritt S24.

Während der Fahrt des Fahrzeugs kann anhand einer aktuellen Fahrsituation, aktueller Fahrzeugdaten und insbesondere einer aktuellen Umgebungstemperatur eine Anpassung der prädiktiven Bestimmung des Leistungsplans erfolgen (S14). In diesem Falle können die auf Schritt S14 folgenden Schritte ebenfalls angepasst werden.

Außerdem kann während der Fahrt aufgrund aktueller Routeneinflüsse, wie beispielsweise Verkehrsbedingungen (Stau etc.), aktueller Witterung und aktueller Umgebungstemperatur eine Anpassung der Routenplanung (S10) erfolgen, wodurch die auf Schritt S10 folgenden Schritte ebenfalls angepasst werden.

Das Brennstoffzellensystem kann in Ausführungsformen eine externe Dateneinheit 500 umfassen, und die Steuereinrichtung kann zur Kommunikation mit der externen Dateneinheit 500 eingerichtet sein, beispielsweise über Mobilfunk. Die externe Dateneinheit 500 kann beispielsweise die Schritte S10 (Routenplanung) und/oder S12 (Streckenplanung) ausführen. Fahrzeugdaten können von der Steuereinrichtung 180 zur externen Dateneinheit 500 kommuniziert werden. Der Leistungsplan, der Kühlleistungsplan, sowie die Daten zur benötigten Wassermenge und zur zu gewinnenden Wassermenge können beispielsweise von der externen Dateneinheit 500 zur Steuereinrichtung 180 kommuniziert werden, wenn sie durch die externe Dateneinheit 500 bestimmt werden. Die Prüfung der Restkapazität wird vorzugsweise von der Steuereinrichtung 180, also fahrzeugseitig, vorgenommen. Von den beschriebenen Verfahrensschritten können einige im Vorfeld der Fahrt oder während der Fahrt außerhalb des Fahrzeugs durch die externe Dateneinheit 500 ausgeführt werden, beispielsweise durch ein cloudbasiertes System oder einen sonstigen Server. Sowohl der zu Schritt S14 beschriebene Leistungsplan als auch der zu Schritt S16 beschriebene Kühlleistungsplan kann von der Steuereinrichtung 180 als Leistungsplan zur Auswahl der entsprechenden Betriebsmodi verwendet werden.

Alternativ zu dem druckbeaufschlagten Wassertank 113 der beschriebenen Ausführungsformen, der durch die Hochdruckpumpe 111 befüllt wird, kann ein nichtdruckbeaufschlagter Wassertank 113 vorgesehen sein, und statt der Hochdruckpumpe 111 oder zusätzlich kann eine Pumpe 411 vorgesehen sein, um Wasser aus dem Wassertank 113 der Wasserausstoßvorrichtung 120 zuzuführen. Die Wasserausstoßvorrichtung 120 kann durch Ansteuern des optionalen Ventils 118 und/oder der genannten Pumpe 411 gesteuert werden.

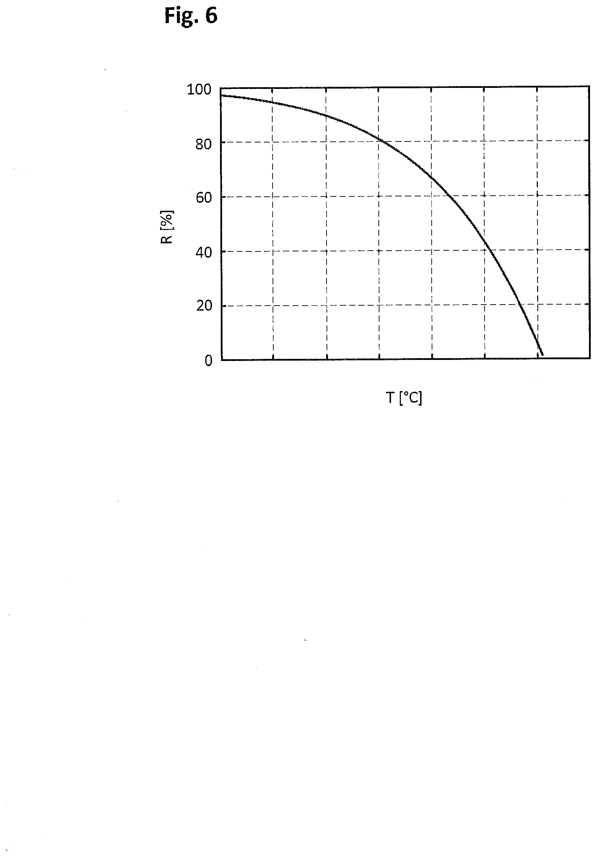

Fig. 6 zeigt schematisch beispielhaft die relative Kondensationsrate R des gasförmigen Produktwassers im Abgas der Brennstoffzelle 20 in Abhängigkeit von der Abgastemperatur bzw. der im Abgaskühler 105 erreichten Temperatur T des Abgases. Die Abbildung zeigt einen annähernd exponentiellen Verlauf der Funktion. Aus dem Verlauf der Kondensationsrate R ist zu erkennen, dass bereits bei einer Abkühlung des Abgases um eine relative geringe Temperaturdifferenz eine große Menge flüssigen Wassers aus dem Abgas generiert werden kann. Zusammen mit dem Wassertank 113 kann somit in effizienter Weise ein Vorrat von Wasser zum Kühlen des Kühlers 35 in späteren Betriebsphasen der Brennstoffzelle 20 mit höherer Brennstoffzellenleistung angelegt werden.

### Bezugszeichen

10 Brennstoffzellensystem
20 Brennstoffzelle
30 Kühlvorrichtung
32 Kühlkreislauf
33 Pumpe
34 Lüfter
35 Kühler
36 Lüfterantrieb
38 Kühlluftstrom
40 Primärpfad
100 Wassergewinnungsvorrichtung
101 Sekundärpfad
102 Abgasleitung
103 Abzweigventil
104 Auslassleitung
105 Abgaskühler
106 Flüssigkeits-Abscheider
107 Auslassleitung
108 Rohrleitung
109 Wasserspeicher
110 Rohrleitung
111 Hochdruckpumpe
112 Rückschlagventil
113 Wassertank
114 Rohrleitung
115 Ventil
116 Druckquelle
117 Wasserleitung
118 Ventil
120 Wasserausstoßvorrichtung
121 Ablassöffnung
122 Ablassventil
124 Verdunstungskühlungssystem
130 Ventil
131 Druckablassventil
132 Verschluss
150 Wärmetauscher
152 Wand
180 Steuereinrichtung
193 Sensoren
200 Sekundärpfad
201 Kältekreislauf
220 Düsen
300 Wärmetauscher
301 Luftkanal
303 Lüfter
411 Pumpe
500 Dateneinheit

## Patentansprüche

1. Brennstoffzellensystem für ein Fahrzeug, aufweisend:
eine Brennstoffzelle (20);
eine Abgasleitung (102) zum Abführen von Wasser enthaltendem Abgas von der Brennstoffzelle (20);
eine Wassergewinnungsvorrichtung (100) zum Gewinnen von flüssigem Wasser aus dem Abgas, wobei die Wassergewinnungsvorrichtung einen Abgaskühler (105) aufweist, wobei der Abgaskühler (105) einen Wärmetauscher (150) umfasst, der an der Abgasleitung (102) angeordnet ist und dazu eingerichtet ist, durch Übertragen von Wärme von dem Abgas an einen Strom eines Kühlmediums das in der Abgasleitung (102) über den Wärmetauscher (150) geführte Abgas zu kühlen und in dem Abgas enthaltenes Wasser zu kondensieren, wobei das dem Wärmetauscher (150) mit dem Abgas zugeführte Wasser einschließlich des daraus kondensierten Wassers über die Abgasleitung (102) von dem Wärmetauscher (150) abgeführt wird;
einen Wassertank (113), der stromabwärts des Wärmetauschers (150) mit der Wassergewinnungsvorrichtung (100) gekoppelt ist und dazu eingerichtet ist, gewonnenes Wasser zu speichern;
eine Kühlvorrichtung (30) zum Kühlen der Brennstoffzelle (20), umfassend einen Kühler (35);
eine Wasserausstoßvorrichtung (120) zum Ausstoßen und Verteilen von Wasser auf dem Kühler (35) oder in einem Zuluftstrom des Kühlers (35);
eine Wasserleitung (117), um Wasser aus dem Wassertank (113) der Wasserausstoßvorrichtung (120) zuzuführen; und
eine Steuereinrichtung (180), die für ein Betriebsverfahren des Brennstoffzellensystems eingerichtet ist, bei dem:
durch die Steuereinrichtung (180) anhand eines Leistungsplans, der eine Abfolge von geplanten Betriebsphasen mit unterschiedlich hohen Leistungsanforderungen an die Brennstoffzelle umfasst, entsprechend der geplanten Betriebsphasen selektiv Betriebsmodi für das Brennstoffzellensystem ausgewählt werden (S24), die wenigstens einen Betriebsmodus zur Wassergewinnung und wenigstens einen Betriebsmodus zum Wasserausstoß umfassen,
wobei in dem wenigstens einen Betriebsmodus zur Wassergewinnung die Wassergewinnungsvorrichtung (100) betrieben wird, um flüssiges Wasser aus dem Abgas zu gewinnen und dem Wassertank (113) zuzuführen, und
wobei in dem wenigstens einen Betriebsmodus zum Wasserausstoß Wasser aus dem Wassertank (113) der Wasserausstoßvorrichtung (120) zugeführt wird und von der Wasserausstoßvorrichtung (120) ausgestoßen und auf dem Kühler (35) oder in einem Zuluftstrom des Kühlers (35) verteilt wird,
wobei der wenigstens eine Betriebsmodus zum Wasserausstoß einen Betriebsmodus zum Wasserausstoß umfasst, in welcher die Wassergewinnungsvorrichtung (100) nicht aktiv betrieben wird.

2. Brennstoffzellensystem nach Anspruch 1, bei dem die Kühlvorrichtung (30) zum Kühlen der Brennstoffzelle einen Kühlkreislauf (32) mit einem Kühlmedium umfasst, wobei der Kühlkreislauf (32) einen Kühlpfad (101) umfasst, der über den Wärmetauscher (150) verläuft, und der dazu eingerichtet ist, den Strom des Kühlmediums über den Wärmetauscher (150) bereitzustellen.

3. Brennstoffzellensystem nach Anspruch 1, bei dem der Strom des Kühlmediums über den Wärmetauscher (300) ein Strom von Luft aus der Umgebung des Fahrzeugs ist.

4. Brennstoffzellensystem nach einem der vorstehenden Ansprüche, bei dem der Wassertank (113) durch eine Druckquelle (116) mit Druck beaufschlagbar ist, wobei die Wasserleitung (117) ein Ventil (118) aufweist, über welches der Wassertank (113) mit der Wasserausstoßvorrichtung (120) verbindbar ist, wobei die Wasserausstoßvorrichtung (120) dazu eingerichtet ist, Wasser aus dem durch das Ventil (118) verbundenen Wassertank (113) durch den Druck, mit dem der Wassertank (113) beaufschlagt ist, auszustoßen und auf dem Kühler (35) oder in einem Zuluftstrom des Kühlers (35) zu verteilen.

5. Brennstoffzellensystem nach Anspruch 4, weiter aufweisend eine Pumpe (111), die dazu eingerichtet ist, von dem Wärmetauscher (150) über die Abgasleitung (102) abgeführtes Wasser in den Wassertank (113) einzuspeisen gegen den Druck, mit dem der Wassertank (113) beaufschlagt ist.

6. Brennstoffzellensystem nach einem der vorstehenden Ansprüche, bei dem der Kühler (35) einen Lüfterantrieb (36) aufweist, wobei das Brennstoffzellensystem (10) eine oder die Steuereinrichtung (180) umfasst, die für einen Betriebsmodus zum Wasserausstoß eingerichtet ist, bei der die Wasserausstoßvorrichtung (120) Wasser ausstößt und auf dem Kühler (35) oder in einem Zuluftstrom des Kühlers (35) verteilt, und bei der die Steuereinrichtung (180) eine Leistung des Lüfterantriebs (36) des Kühlers (35) steuert.

7. Fahrzeug mit einem Brennstoffzellensystem nach einem der vorstehenden Ansprüche.

8. Fahrzeug nach Anspruch 7, bei dem der Leistungsplan in Abhängigkeit von einem Ortsverlauf des Fahrzeugs und/oder von einem Zeitverlauf eine Leistungsanforderung an die Brennstoffzelle (20) bestimmt.

9. Fahrzeug nach Anspruch 7 oder 8, bei dem die Steuereinrichtung (180) dazu eingerichtet ist, den Leistungsplan während einer Fahrt des Fahrzeugs basierend auf einer aktuellen Bewegung des Fahrzeugs anzupassen.

## Claims

1. A fuel cell system for a vehicle, including:
a fuel cell (20);
an exhaust line (102) for exhausting exhaust gas containing water from the fuel cell (20);
a water collection device (100) for collecting liquid water from the exhaust gas, the water collection device comprising an exhaust gas cooler (105), wherein the exhaust gas cooler (105) comprises a heat exchanger (150) disposed on the exhaust line (102) and adapted to, by transferring heat from the exhaust gas to a flow of a cooling medium, cool the exhaust gas passed in the exhaust line (102) via the heat exchanger (150) and condense water contained in the exhaust gas, wherein the water supplied to the heat exchanger (150) with the exhaust gas, including the water condensed therefrom, is discharged from the heat exchanger (150) via the exhaust line (102);
a water tank (113) coupled to the water collection device (100) downstream of the heat exchanger (150) and adapted to store collected water;
a cooling device (30) for cooling the fuel cell (20), comprising a cooler (35);
a water ejection device (120) for ejecting and distributing water on the cooler (35) or in a supply air stream of the cooler (35);
a water line (117) for supplying water from the water tank (113) to the water ejection device (120); and
a control means (180) which is arranged for an operating method of the fuel cell system in which:
by the control means (180), based on a power schedule comprising a sequence of planned operating phases with different power requirements for the fuel cell, operating modes for the fuel cell system are selectively chosen according to the planned operating phases (S24), which operating modes comprise at least one operating mode for water collection and at least one operating mode for water ejection,
wherein in the at least one operating mode for water collection, the water collection device (100) is operated to collect liquid water from the exhaust gas and supply it to the water tank (113), and
wherein, in the at least one operating mode for water ejection, water is supplied from the water tank (113) to the water ejection device (120) and ejected from the water ejection device (120) and distributed on the cooler (35) or in a supply air stream of the cooler (35),
wherein the at least one operating mode for water ejection comprises an operating mode for water ejection in which the water collection device (100) is not actively operated.

2. The fuel cell system according to claim 1, wherein the cooling device (30) for cooling the fuel cell comprises a cooling circuit (32) comprising a cooling medium, the cooling circuit (32) comprising a cooling path (101) that passes over the heat exchanger (150) and that is adapted to provide the flow of the cooling medium over the heat exchanger (150).

3. The fuel cell system according to claim 1, wherein the flow of the cooling medium via the heat exchanger (300) is a flow of air from environment of the vehicle.

4. The fuel cell system according to any one of the preceding claims, wherein the water tank (113) is pressurizable by a pressure source (116), wherein the water line (117) includes a valve (118) via which the water tank (113) is connectable to the water ejection device (120), wherein the water ejection device (120) is arranged to eject water from the water tank (113) connected by the valve (118) by the pressure applied to the water tank (113) and to distribute it on the cooler (35) or in a supply air flow of the cooler (35).

5. The fuel cell system according to claim 4, further comprising a pump (111) adapted to feed water discharged from the heat exchanger (150) via the exhaust line (102) into the water tank (113) against pressure applied to the water tank (113).

6. The fuel cell system according to any one of the preceding claims, wherein the cooler (35) includes a fan drive (36), the fuel cell system (10) comprising a or the control means (180) adapted for a water ejection operation mode, wherein the water ejection device (120) ejects and distributes water on the cooler (35) or in a supply air stream of the cooler (35), and wherein the control means (180) controls a power of the fan drive (36) of the cooler (35).

7. Vehicle having a fuel cell system according to any one of the preceding claims.

8. Vehicle according to claim 7, wherein the power schedule determines a power demand to the fuel cell (20) in dependence on a spatial course and/or a time course of the vehicle.

9. Vehicle according to claim 7 or 8, wherein the control means (180) is configured to adjust the power schedule during a travel of the vehicle based on the vehicle's current motion.

## Revendications

1. Système de pile à combustible pour un véhicule, comportant :
une pile à combustible (20) ;
une conduite de gaz d'échappement (102) destinée à évacuer des gaz d'échappement contenant de l'eau de la pile à combustible (20) ;
un dispositif de récupération d'eau (100) destiné à extraire de l'eau liquide des gaz d'échappement, le dispositif de récupération d'eau comportant un refroidisseur de gaz d'échappement (105), le refroidisseur de gaz d'échappement (105) comprenant un échangeur de chaleur (150), qui est disposé sur la conduite de gaz d'échappement (102) et est mis au point pour refroidir les gaz d'échappement guidés dans la conduite de gaz d'échappement (102) par l'échangeur de chaleur (150) en transférant la chaleur des gaz d'échappement à un flux d'un fluide de refroidissement et pour condenser de l'eau contenue dans les gaz d'échappement, l'eau amenée à l'échangeur de chaleur (150) avec les gaz d'échappement, y compris l'eau condensée à partir de celui-ci, étant évacuée de l'échangeur de chaleur (150) par la conduite de gaz d'échappement (102) ;
un réservoir d'eau (113), qui est couplé au dispositif de récupération d'eau (100) en aval de l'échangeur de chaleur (150) et est configuré pour stocker l'eau récupérée ;
un dispositif de refroidissement (30) destiné à refroidir la pile à combustible (20), comprenant un refroidisseur (35) ;
un dispositif d'évacuation d'eau (120) destiné à expulser et distribuer l'eau sur le refroidisseur (35) ou dans un flux d'air d'arrivée du refroidisseur (35) ;
une conduite d'eau (117) pour amener au dispositif d'évacuation d'eau (120) de l'eau provenant du réservoir d'eau (113) ; et
un équipement de commande (180), qui est mis au point pour un mode de fonctionnement du système de pile à combustible, dans lequel :
l'équipement de commande (180) permet, à l'aide d'un plan de performance, qui comprend une séquence de phases de fonctionnement planifiées avec des exigences de performance de niveaux différents imposées à la pile à combustible, de choisir (S24) sélectivement des modes de fonctionnement pour le système de pile à combustible conformément aux phases de fonctionnement planifiées, lesquels comprennent au moins un mode de fonctionnement pour la récupération d'eau et au moins un mode de fonctionnement pour l'évacuation d'eau,
le dispositif de récupération d'eau (100) fonctionnant dans l'au moins un mode de fonctionnement pour la récupération d'eau, pour récupérer de l'eau liquide des gaz d'échappement et l'acheminer au réservoir d'eau (113), et
de l'eau provenant du réservoir d'eau (113) étant amenée au dispositif d'évacuation d'eau (120) dans l'au moins un mode de fonctionnement pour l'évacuation d'eau et étant évacuée par le dispositif d'évacuation d'eau (120) et étant distribuée sur le refroidisseur (35) ou dans un flux d'air d'arrivée du refroidisseur (35),
l'au moins un mode de fonctionnement pour l'évacuation d'eau comprenant un mode de fonctionnement pour l'évacuation d'eau, dans lequel le dispositif de récupération d'eau (100) ne fonctionne pas activement.

2. Système de pile à combustible selon la revendication 1, dans lequel le dispositif de refroidissement (30) destiné à refroidir la pile à combustible comprend un circuit de refroidissement (32) avec un fluide de refroidissement, le circuit de refroidissement (32) comprenant un trajet de refroidissement (101) qui passe par l'échangeur de chaleur (150) et qui est mis au point pour fournir le flux du fluide de refroidissement par l'échangeur de chaleur (150).

3. Système de pile à combustible selon la revendication 1, dans lequel le flux du fluide de refroidissement par l'échangeur de chaleur (300) est un flux d'air provenant de l'environnement du véhicule.

4. Système de pile à combustible selon l'une des revendications précédentes, dans lequel le réservoir d'eau (113) peut être soumis à l'action d'une pression par une source de pression (116), la conduite d'eau (117) comportant une soupape (118), par laquelle le réservoir d'eau (113) peut être relié au dispositif d'évacuation d'eau (120), le dispositif d'évacuation d'eau (120) étant mis au point pour évacuer l'eau du réservoir d'eau (113) relié par la soupape (118) par la pression, à l'action de laquelle le réservoir d'eau (113) est soumis, et la distribuer sur le refroidisseur (35) ou dans un flux d'air d'arrivée du refroidisseur (35).

5. Système de pile à combustible selon la revendication 4, comportant par ailleurs une pompe (111), qui est mise au point pour injecter de l'eau évacuée de l'échangeur de chaleur (150) par la conduite de gaz d'échappement (102) dans le réservoir d'eau (113) à l'encontre de la pression, à l'action de laquelle le réservoir d'eau (113) est soumis.

6. Système de pile à combustible selon l'une des revendications précédentes, dans lequel le refroidisseur (35) comporte un entraînement de ventilateur (36), le système de pile à combustible (10) comprenant un ou l'équipement de commande (180) qui est mis au point pour un mode de fonctionnement pour l'évacuation d'eau, dans lequel le dispositif d'évacuation d'eau (120) évacue de l'eau et la distribue sur le refroidisseur (35) ou dans un flux d'air d'arrivée du refroidisseur (35), et dans lequel l'équipement de commande (180) commande une performance de l'entraînement de ventilateur (36) du refroidisseur (35).

7. Véhicule avec un système de pile à combustible selon l'une des revendications précédentes.

8. Véhicule selon la revendication 7, dans lequel le plan de performance détermine une exigence de performance imposée à la pile à combustible (20) en fonction d'un profil de localisation du véhicule et/ou d'un profil temporel.

9. Véhicule selon la revendication 7 ou 8, dans lequel l'équipement de commande (180) est mis au point pour adapter le plan de performance pendant un trajet du véhicule sur la base d'un déplacement actuel du véhicule.
